# EUROPÄISCHE PATENTANMELDUNG

(11) **EP 3 502 812 A1**
(43) Veröffentlichungstag der Anmeldung: **26.06.2019**
(21) Anmeldenummer: 17209338.7
(22) Anmeldetag: 21.12.2017
(51) Int. Cl.: G05B 19/042

(54) **ANZEIGE VON SYMBOLEN ZU REFERENZEN IN EINEM DEBUGGER FÜR INDUSTRIELLE AUTOMATISIERUNGSKOMPONENTEN**

(71) Anmelder: Siemens Aktiengesellschaft, 80333 München (DE)
(72) Erfinder: KLOSE, Alexander, 96114 Hirschaid (DE); OPATERNY, Thilo, 90453 Nürnberg (DE); ROEHRICHT, Ronny, 90453 Nürnberg (DE); SCHULZ, Dietmar, 90574 Rosstal (DE)

(57) **Zusammenfassung**

Die Erfindung betrifft ein Verfahren und eine Debugging-Einrichtung zum Überwachen eines industriellen Steuerungsprogramms, wobei in dem industriellen Steuerungsprogramm Referenzen zu komplexen Strukturen, insbesondere zusammengesetzte Datentypen und/oder Arrays, verwendet werden. Dabei werden bei einem Übersetzungsvorgang des industriellen Steuerungsprogramms in einer Symboltabelle Zuordnungen zwischen den Adressen der Objekte bzw. Member der komplexen Strukturen zu ihren Symbolen hinterlegt, wobei bei einer Ausführung des industriellen Steuerungsprogramms, insbesondere während eines Debuggings, aus den Adressen in den Referenzen des betrachteten Programmabschnittes aus der Symboltabelle zumindest das jeweilige Symbol des referenzierten bzw. de-referenzierten Objekts bzw. Members der komplexen Datenstruktur bestimmt und angezeigt wird. Dabei ist von Vorteil, dass der Debugger auch bei komplexen referenzierten Strukturen nicht nur Adressen anzeigt, sondern auch Symbole. Vorteilhafterweise muss ein Anwender dazu keine zusätzlichen Anweisungen geben. Das System entscheidet in einer vorteilhaften Variante selbständig, wann Symbole angezeigt werden, und wann Variablenwerte ausreichend sind.

## Beschreibung

In den Programmiersprachen für industrielle Automatisierungsanordnungen, beispielsweise in den nach IEC61131 definierten Programmiersprachen, ist es möglich, Referenzen zum Zugriff auf Daten zu verwenden, insbesondere zum Zugriff auf den Wert von Variablen. Dazu definiert ein Anwender eine Referenz durch Zuweisung einer Adresse einer Variablen.

Für das Debugging von PLC-Programmen entsteht dabei jedoch der Nachteil, dass das Symbol dieser Variablen damit "verloren" geht, also beim Anzeigen der Referenz bzw. des durch die Referenz adressierten Datums das entsprechende Symbol von dem Debugging-System nicht zugeordnet und somit nicht dargestellt werden kann. Dies stellt insbesondere bei Strukturen, Arrays und anderen komplexen Datentypen einen gravierenden Nachteil dar, weil ein Benutzer den dargestellten Inhalt, also beispielsweise die Werte, nicht direkt zuzuordnen weiß.

Grundsätzlich sind Referenzen in vielen Programmiersprachen bekannt. Sie sind wie ein "alias" oder ein Zeiger ein Verweis auf existierende Objekte, insbesondere Daten. Sie werden verwendet, um Zusammenstellungen, stacks (LIFO), queues (FIFO) und dergleichen zu realisieren, ohne den Inhalt des Objektes, also die Daten, kopieren oder vervielfältigen zu müssen.

In industriellen Programmiersprachen kann ein Benutzer eine Variable deklarieren, die eine Referenz zu einem spezifischen Datentyp ist, indem "reference_name : REF_TO data_type_name" eingetippt wird. In einem zweiten Schritt kann die Referenz definiert werden durch den Bezug auf eine existierende Variable, in dem "reference_name := REF(variable_name)" eingegeben wird. Von diesem Zeitpunkt an arbeitet die Referenz als ein "alias" für die Variable. Die Variable "variable_name" kann also nicht nur durch ihren Namen, sondern auch durch die Referenz durch Eingabe von "reference_name^" zugegriffen werden; das "Dach-Symbol - ^" zeigt an, dass mit dieser Eingabe eine De-Referenzierung gemeint ist.

Ohne diesen zweiten Schritt hätte man eine undefinierte Referenz. Diese sogenannte "NULL-Referenz" kann nicht für eine De-Referenzierung verwendet werden. Folglich haben alle bekannten Systeme, die Referenzen verwenden, Hilfsmittel, um undefinierte Referenzen aufzufinden. Solche Anweisungen können im strukturierten Text nach IEC 61131 beispielsweise als "reference_name = NULL" oder "reference_name <> NULL" aufgefunden werden.

Die Programmiersprachen nach IEC 61131 unterscheiden lokale Objekte, welche nur solange existent sind, wie der betreffende Code-Baustein (function) ausgeführt wird, und globale Objekte, welche auch außerhalb jeglicher Code-Blöcke und Aufgaben existieren. Es kann globale und lokale Referenzen zu globalen Objekten geben, aber keine globalen Referenzen zu lokalen Objekten, denn eine Referenz kann kein Objekt referenzieren oder zugreifen, dessen Existenz schon beendet wurde. Daher haben gängige Programmiersysteme Schutzmechanismen, die globale Referenzen zu lokalen Objekten verhindern; somit werden unstabile Programme vermieden.

Ein Objekt kann Referenzen zu komplexen Datentypen umfassen. Falls beispielsweise der Datentyp eine Struktur ist, dann ist es möglich, die einzelnen Objekte der Struktur (structure member) über eine Referenz zu erreichen oder zuzugreifen, die beispielsweise in der Form "reference_name^.member_name" abgefasst ist. Es ist außerdem möglich, Matrizen (arrays) von Referenzen zu Strukturen zu haben oder Referenzen zu arrays von Strukturen. Um ein Objekt (member) in einem array von Referenzen zu einer Struktur zuzugreifen, kann beispielsweise ein Befehl nach dem Schema "aorts[#i]^.member" eingefügt werden. Um ein Objekt einer Referenz zu einem array von Strukturen zuzugreifen, würde derselbe Befehl "rtaos^[#i].member" lauten.

Was die Anzeige brauchbarer Informationen beim Debugging noch schwieriger macht, ist die Tatsache, dass Referenzen redefiniert werden können. Dies bedeutet, dass zu einem ersten Zeitpunkt eine Referenz eine erste Variable adressieren kann, und nach einiger Zeit eine andere Variable. Angenommen, ein Programm hat eine Nachrichten-Warteschlange (message queue) um Prozessdiagnose-Nachrichten von einer Aufgabe (task) zu einer anderen zu übertragen, dann kann es beispielsweise in einer hoch-prioren Aufgabe passieren, dass das System einen Fehler oder ein Problem feststellt und eine Fehlerreport-Struktur befüllt. Diese Fehlerreport-Struktur soll dann durch eine niedriger priorisierte Aufgabe zu einem Bedien- und Beobachtungssystem (HMI device) gesendet werden. Weiter sei angenommen, dass ein weiterer hoch-priorer task ebenso in der Lage ist, Nachrichten zu erzeugen, aber das Kommunikationssystem kann nur Nachricht-für-Nachricht nacheinander versenden. Also wird eine Warteschlange (queue) für diese Nachrichten benötigt. Eine solche Nachrichten-Warteschlange (queue) ist gewöhnlich hauptsächlich eine Liste oder ein array von Referenzen zu einer Fehlerstruktur. Um eine solche Nachrichten-Warteschlange aufzubauen, sind zwei globale Variablen für den ersten Index und für den letzten Index notwendig.

Zum Programmstart ist die Nachrichten-Warteschlange leer. Also sind der erste Index und der letzte Index zu dem unteren Ende des arrays oder der Liste gesetzt. Dabei ist also die Nachrichten-Warteschlange leer, wenn der erste und wenn der letzte Index identisch sind. Wenn eine Aufgabe die Fehlerstruktur befüllt hat, wird diese anschließend aufgelöst. Dies bedeutet, dass die letzte Index-Referenz in der Struktur (Liste, array) zu der Fehlerstruktur der entsprechenden Aufgabe verweist und der letzte Index hochgezählt wird. Die Sende-Aufgabe überprüft, ob der Kommunikationskanal frei ist und ob Elemente in der Nachrichten-Warteschlange vorliegen. Wenn dies der Fall ist, wird durch die Sende-Aufgabe die Fehlerstruktur bzw. deren Inhalt, der durch den ersten Index adressiert wird, in die Kommunikations-Warteschlange kopiert und die Kommunikation wird gestartet, so dass die versendete Nachricht aus der Nachrichten-Warteschlange entfernt wird. Entfernen meint in diesem Zusammenhang, den Wert "NULL" in die erste Referenz zu schreiben und den ersten Index hochzuzählen.

Dieses einfache Beispiel zeigt, dass - beispielsweise für den Fall, dass an dieser Stelle ein Debugging durchgeführt werden soll - nicht nachvollziehbar ist, welches Objekt durch die Referenz nun referenziert wird.

Zur Fehlerbereinigung von Anwendungsprogrammen werden gebräuchlich sogenannte "Debugger" eingesetzt, die einen Programmierer oder eine andere Bedienperson meist mittels einer grafischen Benutzeroberfläche über die jeweiligen Programmzustände, Variablen-Inhalte (Werte) und andere wichtige Informationen informieren. Wenn ein Problem auftritt, sollte ein solcher "Debugger" in der Lage sein, Referenzen zu verarbeiten. übliche Programmiersysteme und ihre Debugger, wie etwa "Visual Studio", GCC oder GDB arbeiten mit Symboltabellen. In den Symboltabellen sind für alle globalen Symbole die zugrunde liegenden Adressen eingetragen. Allerdings sind in diesen allgemein gebräuchlichen Programmierungen nur vergleichsweise wenige globale Symbole üblich, und es ist umständlich, die zugrundeliegenden Adressen bereitzustellen. Die meisten Objekte werden erst zur Laufzeit auf einem Stapel ("heap") erzeugt und haben deswegen kein Symbol. Aus diesem Grund haben übliche Programmiersysteme nur einen teilweisen Support, um zu einem referenzierten Objekt das zugehörige Symbol zu kennen und anzuzeigen. In der Regel wird nur ein Symbol der Referenz und als Wert der Referenz eine Adresse angezeigt. Nur für globale Adressen kann ein separates Kommando ausgeführt werden, um das Symbol, also meist den Variablennamen, für das referenzierte Objekt zu beschaffen und anzuzeigen. Die Adresse kann dann referenziert werden und die Werte der adressierten Struktur-Bestandteile (structure members; members), die nicht direkt referenziert sind, werden angezeigt. Werden beispielsweise zwei verschiedene Referenzen angezeigt, dann müssen die damit referenzierten Adressen, in der Regel 64-bit-Hexwerte, verglichen werden, um festzustellen, ob die beiden Referenzen dasselbe Objekt referenzieren.

In den bekannten Programmiersystemen "visual studio" oder GDB kann ein Benutzer einen sogenannten "break point" definieren, an welchem die Programmausführung gestoppt wird. Ein Benutzer kann dann die lokalen Variablen der gerade unterbrochenen Funktion (function) oder referenzierte Objekte auf dem Stapelspeicher (heap) untersuchen, sofern eine Referenz dorthin in der unterbrochenen Funktion zugreifbar ist. Es ist ebenfalls möglich, die üblicherweise wenigen existierenden globalen Variablen zu untersuchen bzw. anzuzeigen.

Bei den hier gegenständlichen Programmen für speicherprogrammierbare Steuerungen (PLC-Programme, Steuerungsprogramme, industrielle Anwendungsprogramme) ist es in der Regel nicht möglich bzw. empfehlenswert und daher ungebräuchlich, die Programmausführung zu unterbrechen. Der Grund liegt darin, dass eine speicherprogrammierbare Steuerung regelmäßig Prozesse und dergleichen steuert, so dass ein Anhalten des Steuerungsprogramms bedeutet, dass der industrielle Prozess oder dergleichen unkontrolliert verbleibt. Folglich würde ein Stoppen bzw. Unterbrechen eines solchen Programms hohe Risiken bergen, beispielsweise bei der Steuerung eines Aufzugs oder dergleichen. Deswegen unterbrechen üblicherweise die gebräuchlichen "Debugging-Tools" für speicherprogrammierbare Steuerungen eben nicht das Anwendungsprogramm, sondern sie beobachten das Programm, während es weiter fortgesetzt wird. Diese Beobachtung eines Anwendungsprogramms von speicherprogrammierbaren Steuerungen während der laufenden Programmausführung bedeutet, dass die Debugger-Systeme nur beschränkte Möglichkeiten haben, Variablen zu beobachten. Üblicherweise wird nur das dargestellt, was für die gerade ausgeführten Programmzeilen oder "networks" (je nach verwendeter PLC-Programmiersprache) wichtig ist. So wird beispielsweise beim Erreichen einer Anweisung "If #motor.speed > 60 then" nur ein Wert für die Variable "#motor.speed" angezeigt, und bei einer weiteren Programmanweisung bzw. Zeile " "belt".motor[#i].speed > 60 then " wird lediglich jeweils ein Wert für den Index "#i" und ""belt".motor[#i].speed" angezeigt.

Es ist also eine Aufgabe der vorliegenden Erfindung, bei Debuggern für industrielle Automatisierungssysteme den Informationsgehalt der Debugging-Informationen zu verbessern und dabei insbesondere auch für komplexe Datentypen und Strukturen den temporären Bezug von Referenzen klar darzulegen.

Es ist eine Kernidee der vorliegenden Erfindung, dass durch einen Compiler für industrielle Automatisierungsprogramme die Symboltabelle, die während des Übersetzungsvorgangs erstellt bzw. befüllt wird, derart zu erweitern, dass zu den Referenzen zu komplexen Strukturen, z.B. arrays und dergleichen, Symbole zu den einzelnen Objekten der Strukturen, arrays und dergleichen jeweils mit einem Symbol versehen werden können, so dass bei einer referenzierten Adresse und einem Aufruf während des Debugging-Vorgangs aus der Symboltabelle die Information darüber bestimmt und angezeigt werden kann, welches konkrete Objekt (z.B. "member") jeweils adressiert ist.

Gemäß einer Ausgestaltung der vorliegenden Erfindung umfasst das Debugging-System eine Entscheidungsinstanz, die festlegt, bei welchem anzuzeigenden bzw. zu untersuchenden Objekt welche Daten aus der Symboltabelle und aus dem Datenhaushalt der untersuchten speicherprogrammierbaren Steuerung jeweils angezeigt werden sollen, wobei insbesondere zu jeder Referenz das zugeordnete Symbol und zu jeder de-referenzierten Referenz der entsprechende Wert (z.B. Variableninhalt) und das Symbol der Referenz angezeigt werden. Eine weitere Ausgestaltung betrifft die einem Benutzer mögliche Manipulation dieser Tabelle.

Die Aufgabe wird insbesondere durch ein Verfahren gemäß dem Patentanspruch 1 und durch ein Debugging-System gemäß dem Patentanspruch 4 gelöst.

Dabei werden ein Verfahren und eine Debugging-Einrichtung zum Überwachen eines industriellen Steuerungsprogramms vorgeschlagen, wobei in dem industriellen Steuerungsprogramm Referenzen zu komplexen Strukturen, insbesondere zusammengesetzte Datentypen und/oder Arrays, verwendet werden. Dabei werden im Zuge eines Übersetzungsvorgangs (z.B. "compile") des industriellen Steuerungsprogramms in einer Symboltabelle Zuordnungen zwischen den Adressen der Objekte bzw. Member der komplexen Strukturen zu ihren Symbolen hinterlegt, wobei bei einer Ausführung des industriellen Steuerungsprogramms, insbesondere während eines Debuggings, aus den Adressen in den Referenzen des betrachteten Programmabschnittes aus der Symboltabelle zumindest das jeweilige Symbol des referenzierten bzw. de-referenzierten Objekts bzw. Members der komplexen Datenstruktur bestimmt und angezeigt wird. Dabei ist von Vorteil, dass der Debugger auch bei komplexen referenzierten Strukturen nicht nur Adressen anzeigt, sondern auch Symbole. Vorteilhafterweise muss ein Anwender dazu keine zusätzlichen Anweisungen geben. Das System entscheidet in einer vorteilhaften Variante selbständig, wann z.B. Symbole angezeigt werden, und wann Variablenwerte ausreichend sind.

In einer vorteilhaften Ausgestaltung ist in einem Debugging-System für die Fehlersuche in dem industriellen Steuerungsprogramm also eine Entscheidungsstruktur hinterlegt, wobei durch die Entscheidungsstruktur festgelegt wird, welche Informationen zu welchem Programmobjekt, insbesondere Referenzen, Variablen oder Datenstrukturen, angezeigt werden.

Dabei kann einem Benutzer vorteilhaft ein Auswahlmittel zur Verfügung gestellt sein, mit dem aus der Entscheidungstabelle eine Untermenge der zur Anzeige vorgesehenen Informationen selektiert werden kann und/oder die Entscheidungstabelle angepasst werden kann.

Das erfindungsgemäße Verfahren und somit auch das erfindungsgemäße System (Debugging-System für speicherprogrammierbare Steuerungen) werden nachfolgend anhand von Ausführungsbeispielen näher beschrieben.

Das erfindungsgemäße Verfahren und das erfindungsgemäße System sollen nachfolgend am Beispiel des Programmiersystems "Step7" der Siemens AG beschrieben werden, welches ein Programmiersystem darstellt, in dem die Programmiersprachen verwendet werden, die in der Norm IEC 61131 vorgesehen sind. Für jede der in dieser IEC-Norm definierten Programmiersprachen ist in dem System "Step7" ein "Debugger" integriert. Dieser Debugger zeigt für jeden nicht-komplexen Operanden verschiedene Werte an. Der erste Wert, der angezeigt wird, ist der Wert des adressierten Operanden, also der Wert, der in dem Steuerungsprogramm verwendet wird. Sofern der Operand sich in einem Array befindet, werden lediglich die Werte für den jeweiligen Index (array index) angezeigt. So wird in einem Beispiel, in dem eine Datenstruktur für die Zündung eines Kraftfahrzeugs-Motors definiert ist, ein zweidimensionales array "ignition".delay[#rotation, #acceleration]" verwendet, mit drei Werten "#rotation, #acceleration" und der resultierenden Verzögerung (delay).

Systeme wie das hier beschriebene "Step7" haben keinen Stapelspeicher (heap), also auch keine Befehle wie "new" und "delete" zur Erzeugung bzw. Zerstörung von Objekten auf einem "heap". Dies ist eine Eigenheit von PLC-Programmiersystemen, die also konsequenterweise entweder globale Objekte mit eindeutig zugeordneten Symbolen oder lokale Objekte aufweisen, wobei die lokalen Objekte lediglich Symbole aufweisen, die eine eindeutige Verknüpfung auf dem jeweiligen Prioritäts-Level bzw. Aufrufpfad (call path) haben; es handelt sich also um lediglich lokal gültige Symbole. In Step7 und anderen Systemen ist das Symbol für die Ausführungsebene (priority level) der Name des jeweiligen Organisationsbausteins (organization block; OB), der die jeweilige Ausführungsebene implementiert. Der Ausführungspfad (call path) ist nichts weiter als eine Liste von Funktionen oder Funktions-Block-Symbolen.

Im Falle des Auftretens einer Referenz kann ein Programmiersystem wie das hier beschriebene "Step7" auf die referenzierte Adresse zugreifen und damit auflösen, welches Objekt damit adressiert ist. Beispielsweise wird für die Referenz "reference_name" in "Step7" im Debugging-System "variable_name" angezeigt. Im Fall einer De-Referenzierung wird das System den referenzierten Objektnamen und den "de-referenzierten" Wert, also den "Inhalt" der Variable, anzeigen. Für den de-referenzierten Referenznamen "reference_name^" wird das System durch einen Zugriff auf die erfindungsgemäße Symboltabelle das Symbol, nämlich "variable_name" und den Wert der Variablen anzeigen.

In einem solchermaßen erfindungsgemäß veränderten System muss ein Benutzer also nicht separat irgendwelche weiteren Werte anfordern, weil das System selbst entscheidet, wie viele und welche Informationen angezeigt werden. Dazu ist in dem System eine Entscheidungstabelle integriert, die beispielsweise nach den folgenden Vorschriften aufgebaut ist:
- variable → value
- reference → symbol
- reference^ → value, symbol
- array [1] → value
- array[i] → value, value of i
- reference^[1] → value, symbol
- reference^[i] → value, symbol, value of i
- array[1]^ → value, symbol
- array[i]^ → value, symbol, value of i.

Wesentlich ist, dass der Debugger auch bei komplexen referenzierten Strukturen nicht nur Adressen anzeigt, sondern auch Symbole. Vorteilhafterweise muss ein Anwender dazu keine zusätzlichen Anweisungen geben. Das System entscheidet selbständig, wann Symbole angezeigt werden, und wann Variablenwerte ausreichend sind. Die von einem Automatisierungssystem (speicherprogrammierbare Steuerung - PLC) beim Beobachten zurückgelieferte Adresse bzw. Referenz wird vom Debugging-System bzw. Engineering-System (z.B. "Step7") wieder in ein Symbol gewandelt. Dazu wird die im System, insbesondere in der Symboltabelle, vorhandene Information über die beim Übersetzungsvorgang (compile) erzeugten Adressen verwendet.

Ein weiteres vereinfachtes Ausführungsbeispiel wird nachfolgend anhand der Figuren erläutert.

Dabei zeigen:
- Figur 1: eine Debugging-Ansicht einer Funktion (function - FC) aus einem Automatisierungsprogramm mit dem Anweisungsteil im unteren Teil des Bildes, der die Zuweisung zweier Parameter vom Typ Referenz auf temporäre Referenzen veranschaulicht,
- Figur 2: die Definition des Datenbausteins (globale Variablendeklaration) "MyData" aus dem Beispiel,
- Figur 3: die Definition des Datentyps "MyType" aus dem Beispiel, und
- Figur 4: die Versorgung der Referenzen zur Laufzeit durch den Aufruf der Funktion "Referenzer" in einem anderen Baustein.

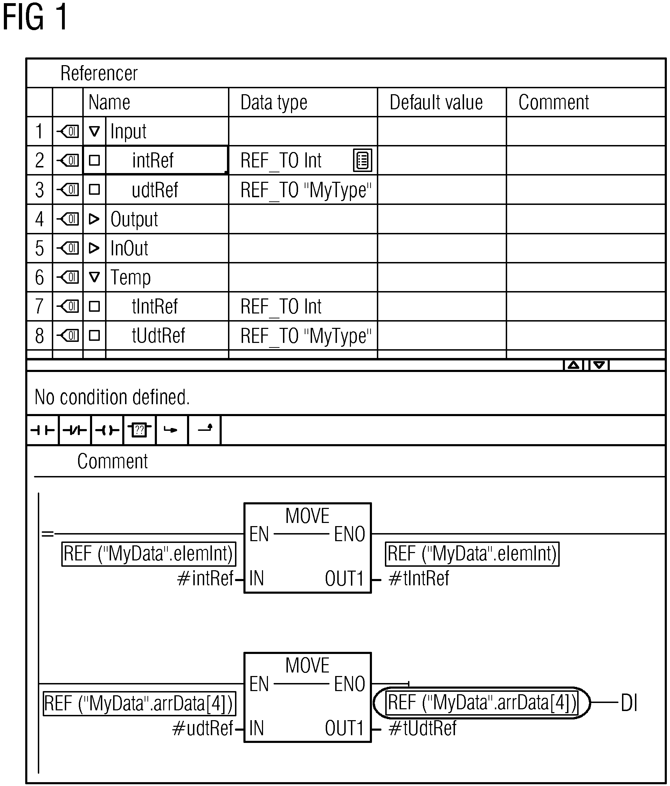

In der Figur 1 ist im unteren Teil der Abbildung eine Debugging-Sicht eines einfachen Netzwerks als Beispiel dargestellt, welches im Wesentlichen aus zwei "MOVE"-Befehlen besteht. Dabei ist der Referenz "#tUdtRef" als Debugging-Information DI die Anzeige "REF("MyData".arrData[4])" zugeordnet und angezeigt. Auch zu den anderen verwendeten Referenzen "#intRef", "#tIntRef" und "udtRef" werden jeweils oberhalb der Referenz die Symbolinformationen angezeigt. Der obere Teil der Figur 1 zeigt dabei die Parameter- und Lokalvariablendeklarationen dieser Funktion mit dem Namen "Referenzer", in denen die Datentypen der Variablen intRef etc. zugewiesen sind.

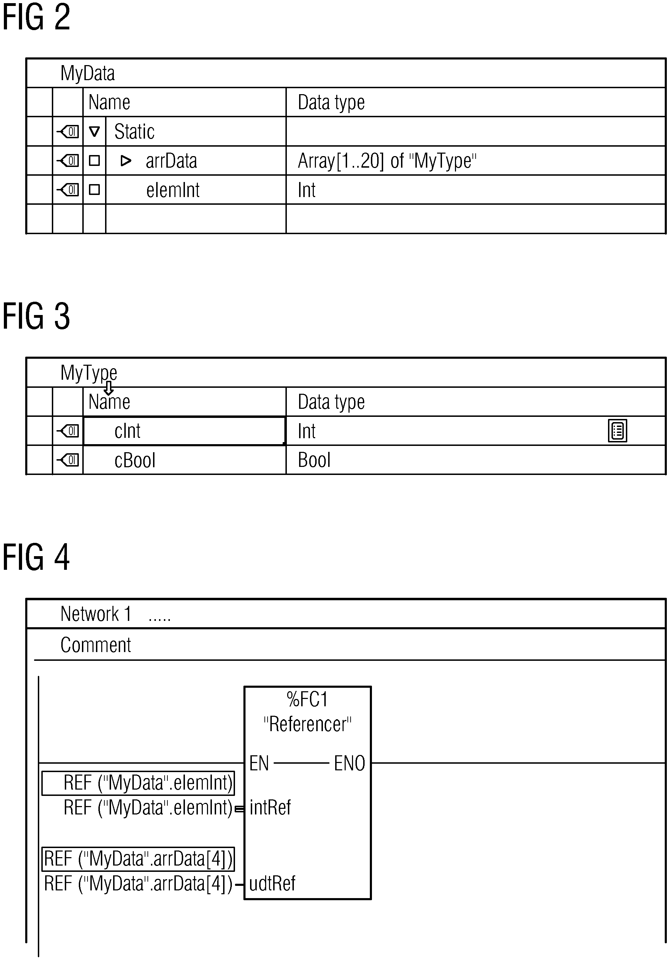

Diesem Beispiel liegt die in der Figur 2 gezeigte Datendefinition zugrunde. Die Funktion "Referencer" zeigt dabei für die Zuweisung zweier Parameter vom Typ Referenz auf temporäre Referenzen an, wohin sie zeigen, nämlich auf die Komponente elemInt bzw. arrData[4] des Datenbausteins "MyData".

In der Figur 3 ist die Datentyp-Definition des verwendeten Datentyps "MyType" dargestellt. Durch die Verwendung einer Integer-Variablen und einer Boole'schen Variablen ergibt sich eine Bytegröße von 4 Byte für jedes Element der Datenstruktur. Diese Information ist zum Debuggen wichtig, weil der Debugger aus der Basisadresse, dem Offset und dem Wissen über die "Länge" (in Byte) des Elementes bestimmen kann, welches "Member" der Struktur und im Arrayfall mit welchem Index referenziert ist (im Beispiel das Element arrData mit Index 4) und das entsprechend symbolisch darstellen kann.

Die Figur 4 zeigt einen Programmabschnitt eines anderen Bausteins, ein sog. Netzwerk ("Network"), in welchem die Referenzen "intRef" und "udtRef" mit den referenzierten "Membern" (Array-Elemente) der Datenstruktur "MyData" zur Programmlaufzeit verknüpft werden. Die Referenzen "intRef" und "udtRef" verweisen im Programm und damit auch als "Input" für den Debugger jeweils auf Daten mit einem Offset in einem Datenbaustein, der gemäß der Figur 2 definiert wurde. Mit dem aus der Figur 3 gewonnenen Wissen, welcher Offset zu welchem Member gehört (dazu wird der Offset durch die Byte-Länge der Elemente dividiert), kann der Debugger die komplette Symbolinformation DI gewinnen, die in Bezug auf die Referenz "udtRef" auch die Bezeichnung des "Members" (hier: 4) umfasst. Gleiches gilt prinzipiell auch für die gezeigten Integer ("#intRef"), allerdings ist dieser Fall einfacher, weil kein Index berücksichtigt werden muss.

Es ist daraus auch ersichtlich, dass in der Symboltabelle nicht zwingend zu jedem Member einer Struktur ein eigenes Symbol gespeichert sein muss - dies würde bei umfangreichen Strukturen auch zu sehr großen Symboltabellen führen. Es ist vielmehr möglich, nach Art einer Berechnungsvorschrift aus Informationen der Symboltabelle und den Laufzeitinformationen der Steuerung die konkrete Symbolinformation zur Laufzeit zu bilden.

## Patentansprüche

1. Verfahren zum Überwachen eines industriellen Steuerungsprogramms,
wobei in dem industriellen Steuerungsprogramm Referenzen zu komplexen Strukturen, insbesondere zusammengesetzte Datentypen und/oder Arrays, verwendet werden,
**dadurch gekennzeichnet,**
**dass** bei einem Übersetzungsvorgang des industriellen Steuerungsprogramms in einer Symboltabelle Zuordnungen zwischen den Anfangsadressen von Objekten und ihren Symbolen gespeichert werden, und
**dass** bei einer Ausführung des industriellen Steuerungsprogramms, insbesondere während eines Debuggings, aus den Adressen in den Referenzen oder den de-referenzierten Referenzen des betrachteten Programmabschnittes mittels der Symboltabelle zumindest das jeweilige Symbol des referenzierten bzw. de-referenzierten Objekts bzw. Members der komplexen Datenstruktur bestimmt und angezeigt wird.

2. Verfahren nach Patentanspruch 1,
**dadurch gekennzeichnet,**
**dass** in einem Debugging-System für die Fehlersuche in dem industriellen Steuerungsprogramm eine Entscheidungsstruktur hinterlegt ist,
wobei durch die Entscheidungsstruktur festgelegt wird, welche Informationen zu welchem Programmobjekt, insbesondere Referenzen, Variablen oder Datenstrukturen, angezeigt werden.

3. Verfahren nach Patentanspruch 2,
**dadurch gekennzeichnet,**
**dass** einem Benutzer ein Auswahlmittel zur Verfügung gestellt wird, mit dem aus der Entscheidungstabelle eine Untermenge der zur Anzeige vorgesehenen Informationen selektiert werden kann und/oder die Entscheidungstabelle angepasst werden kann.

4. Debugging-System für die Fehlerbereinigung eines industriellen Steuerungsprogramms einer speicherprogrammierbaren Steuerung,
wobei das Debugging-System derart ausgestaltet ist,
dass in dem industriellen Steuerungsprogramm Referenzen zu komplexen Strukturen, insbesondere zusammengesetzte Datentypen und/oder Arrays, verwendet werden,
**dadurch gekennzeichnet**,
das Debugging-System weiterhin dazu ausgestaltet ist,
dass bei einem Übersetzungsvorgang des industriellen Steuerungsprogramms in einer Symboltabelle Zuordnungen zwischen den Anfangsadressen von Objekten und ihren Symbolen gespeichert werden, und
dass bei einer Ausführung des industriellen Steuerungsprogramms, insbesondere während eines Debuggings, aus den Adressen in den Referenzen oder den de-referenzierten Referenzen des betrachteten Programmabschnittes mittels der Symboltabelle zumindest das jeweilige Symbol des referenzierten bzw. de-referenzierten Objekts bzw. Members der komplexen Datenstruktur bestimmt und angezeigt wird.

5. System nach Patentanspruch 4,
**dadurch gekennzeichnet,**
**dass** in einem Debugging-System für die Fehlersuche in dem industriellen Steuerungsprogramm eine Entscheidungsstruktur hinterlegt ist,
wobei durch die Entscheidungsstruktur festgelegt ist, welche Informationen zu welchem Programmobjekt, insbesondere Referenzen, Variablen oder Datenstrukturen, angezeigt werden.

6. System nach Patentanspruch 5,
**dadurch gekennzeichnet,**
**dass** ein Auswahlmittel vorgesehen ist, mit dem aus der Entscheidungstabelle eine Untermenge der zur Anzeige vorgesehenen Informationen selektiert werden kann und/oder die Entscheidungstabelle angepasst werden kann.
